# EUROPEAN PATENT SPECIFICATION

(11) **EP 2 181 956 B1**
(45) Date of publication and mention of the grant of the patent: **14.12.2011**
(21) Application number: 09173171.1
(22) Date of filing: 15.10.2009
(51) Int. Cl.: B66C 23/62, B66C 23/70

(54) **Sliding element and telescopic device comprising such a sliding element**
Gleitelement und teleskopische Vorrichtung mit einem solchen Gleitelement
Élément coulissant et dispositif télescopique avec tel élément coulissant

(30) Priority: 29.10.2008 SE 0802297
(43) Date of publication of application: 05.05.2010
(73) Proprietor: Cargotec Patenter AB, SE 341-81 Ljungby (SE)
(72) Inventor: Nilsson, Johan, SE-824 42, HUDIKSVALL (SE)
(74) Representative: Löfgren, Jonas

(56) References cited:
- GB-A- 1 092 995
- JP-A- 2004 035 180
- US-A- 3 298 548
- US-A- 3 809 249

## Description

### FIELD OF THE INVENTION AND PRIOR ART

The present invention relates to a sliding element according to the preamble of claim 1 and a telescopic device, particularly in the form of a telescopic crane boom, according to the preamble of claim 6.

Extendable and retractable telescopic devices with two or more mutually displaceable telescopic parts are of frequent occurrence in different types of apparatuses and machines and can for instance have the form of crane booms, rods, pillars etc. Hydraulic cranes are for instance often provided with one or more telescopic devices in the form of telescopic crane booms where the respective crane boom comprises two or more mutually displaceable telescopic parts in the form of telescopically displaceable crane boom parts. When the mutually displaceable telescopic parts are heavy and/or made of a material with comparatively high coefficient of friction, sliding elements of a material with lower coefficient of friction are often arranged between the telescopic parts in order to facilitate a mutual sliding movement between the telescopic parts and in order to protect the telescopic parts from wearing. Such a sliding element has to be attached in a suitable manner to one of the telescopic parts so that the sliding element is retained on the desired place between the telescopic parts. In some types of telescopic devices, for instance telescopic crane booms, the sliding element is worn down in course of time and it might finally be necessary to exchange it for a new sliding element. In the last-mentioned case, it is desirable that the sliding element is detachably attached to the telescopic part in question in such a manner that the removal of an old worn down sliding element and the installation of a new sliding element can be made easily and rapidly.

A sliding element according to the preamble of claim 1 and a telescopic device according to the preamble of claim 6 are previously known from US 3 221 482 A. US 3 221 482 A shows a sliding element with a plate-shaped body, which is secured to a telescopic part by means of plugs made of the same material as the plate-shaped body. The respective plug is passed through a through hole in the plate-shaped body and through a corresponding recess in the telescopic part in question, whereupon the plug is secured to the plate-shaped body and the telescopic part in question by means of a locking pin which is inserted into a hole in the plug.

Other manners of attaching a sliding element to a telescopic part are for instance shown in FR 2 759 687 A1, US 3 796 016 A, WO 95/16145 A1 and JP 2008-30934 A.

### OBJECT OF THE INVENTION

The object of the present invention is to provide a sliding element with a new design, which in a simple and rapid manner can be attached reliably to an object.

### SUMMARY OF THE INVENTION

According to the present invention, said object is achieved by means of a sliding element having the features defined in claim 1.

The sliding element according to the invention is intended to be attached to a first object and comprises:
- a plate-shaped body with an upper side intended to form a sliding surface between said first object and a second object which is displaceable in relation to the first object, the body being provided with a through hole which is alignable with a recess in said first object;
- a fixing member which is insertable into said hole and recess in order to secure the body to said first object;
- a projection arranged on the underside of the body adjacent to the through hole, which projection comprises a base part projecting from the underside of the body and a locking tongue projecting from the base part, the locking tongue extending out over the underside of the body so as to form one or more outwardly open locking grooves between the underside of the body and the locking tongue, the projection being designed for insertion into said recess and the respective locking groove being designed for engagement with an edge of the first object which delimits the recess.

The sliding element of the invention is attached to an object by first applying the plate-shaped body against the object in such a manner that the projection on the underside of the body is inserted into a recess in the object and the underside of the body comes into contact with a support surface of the object adjacent to the recess, whereupon the body is displaced along the support surface of the object so that the respective locking groove comes into engagement with an edge of the object which delimits the recess and the through hole of the body comes into alignment with the recess in the object. When the body has been made to assume this fastening position, the fixing member is then inserted into said hole and recess in order to secure the body to the object. The fixing member is intended to prevent a displacement of the plate-shaped body along the support surface of the object, at the same time as the locking tongue secures the projection of the body in the recess of the object and thereby prevents a displacement of the body perpendicularly to the support surface of the object. As long as the fixing member, for instance by force fit, is kept in place in the body's hole and the object's recess, the sliding element will consequently be secured to the object in a stable manner.

The entire manipulation of the sliding element in connection with the installation thereof to an object takes place from one and the same side of the object, which will facilitate the installation. Furthermore, with the solution according to the invention, the object will not be provided with any projections in the form of mounting flanges or the similar as support or holder for the sliding element, which implies that the available wear thickness of the sliding element is not limited by any such projections projecting from the surface of the object.

According to an embodiment of the invention, the fixing member is a plug which is insertable into said hole in the plate-shaped body and into said recess in the object and which is fixable to the body and/or the object by force fit. Hereby, it will be possible to mount the fixing member in a rapid and simple manner when the plate-shaped body has been brought into place at the object, at the same time as the fixing member can be removed in a rapid and simple manner so as to make possible an exchange of a worn down sliding element for a new one.

Other favourable features of the sliding element according to the present invention will appear from the dependent claims and the description following below.

The invention also relates to a telescopic device having the features defined in claim 6. This telescopic device, which particularly is a telescopic crane boom, comprises at least two mutually displaceable telescopic parts and a sliding element according to the invention, which is attachable to one of these telescopic parts.

Other favourable features of the telescopic device according to the present invention will appear from the dependent claims and the description following below.

### BRIEF DESCRIPTION OF THE DRAWINGS

The invention will in the following be more closely described by means of embodiment examples, with reference to the appended drawings. It is shown in:
- Fig 1: a perspective view from above of a sliding element ac- cording to a first embodiment of the present invention,
- Fig 2: a perspective view from below of the sliding element according to Fig 1,
- Fig 3: a frontal view of the sliding element according to Fig 1,
- Fig 4: a longitudinal sectional view of the sliding element ac- cording to Fig 1 in an installed state,
- Fig 5: a schematic perspective view from above of a tele- scopic crane boom part provided with a recess for in- stallation of a sliding element of the type illustrated in Figs 1-4,
- Fig 6: a schematic perspective view from below of telescopic crane boom parts provided with sliding elements of the type illustrated in Figs 1-4,
- Fig 7: a perspective view from above of a part of a sliding ele- ment according to a second embodiment of the present invention,
- Fig 8: a perspective view from below of a part of the sliding element according to Fig 7,
- Fig 9: a longitudinal sectional view of the sliding element ac- cording to Fig 7,
- Fig 10: a frontal view of the sliding element according to Fig 7, and
- Fig 11: a perspective view from below of a telescopic crane boom part provided with a sliding element of the type illustrated in Figs 7-10.

### DETAILED DESCRIPTION OF PREFERRED EMBODIMENT

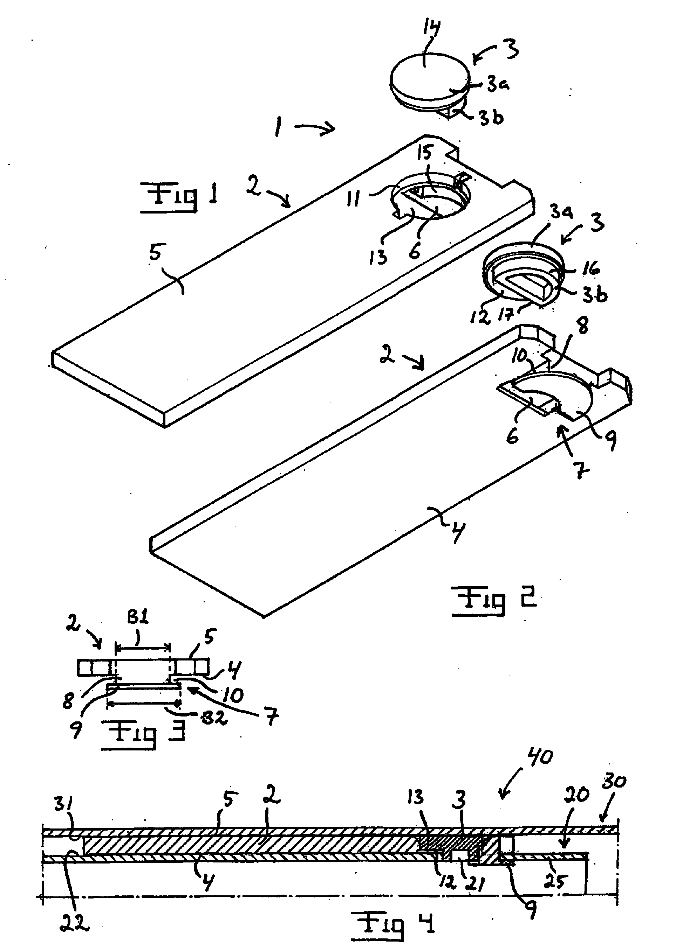

A sliding element 1 according to two different embodiments of the present invention is illustrated in Figs 1-4 and Figs 7-10, respectively. The sliding element 1 comprises a plate-shaped body 2 and a fixing member 3. The body 2 and the fixing member 3 are made of a material with low coefficient of friction, such as for instance a suitable plastic material or a suitable metallic or ceramic material. Suitable materials can for instance be Robalon-Z, POLYform (POM), brass, ceramics or the similar. The body 2 and the fixing member 3 are with advantage made of the same material. The body 2 may be rectangular, as shown in Figs 1, 2, 7 and 8, or have any other suitable shape, for instance circular or elliptical.

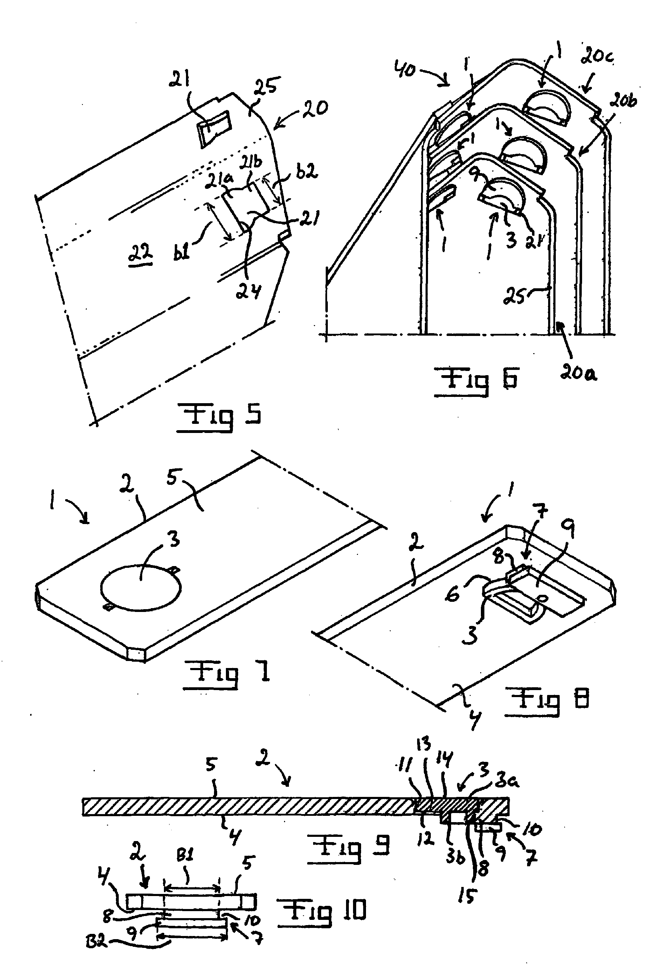

The body 2 has an underside 4, which is intended to abut against a support surface of an object to which the sliding element is mounted, and an opposite upper side 5, which is intended to constitute a sliding surface and slidingly abut against a surface of another object. The body 2 is provided with a through hole 6, which extends between the upper side 5 and the underside 4 of the body. In the illustrated examples, this hole 6 is arranged at one of the ends of the object 2. The hole 6 is alignable with a recess in the object to which the sliding element 1 is intended to be attached, as will be more closely described below. A projection 7 is arranged on the underside 4 of the body adjacent to the hole 6. This projection 7 comprises a base part 8 projecting from the underside 4 of the body and a locking tongue 9 projecting from the base part 8. In the embodiment illustrated in Figs 1-4, the locking tongue 9 is semicircular, but it could also have another suitable shape, such a for instance rectangular as illustrated in Figs 7-10. The locking tongue 9 extends out over the underside 4 of the body so as to form at least one outwardly open locking groove 10 between the underside 4 of the body and the locking tongue 9. The base part 8 forms a bottom surface of the respective locking groove 10. One single continuous locking groove 10 or several individual and mutually separated locking grooves can be formed between the underside 4 of the body under the locking tongue 9. In the illustrated embodiments, the locking tongue 9 extends out over the underside 4 of the body on the short sides of the base part on either side of the base part 8, as illustrated in Figs 3 and 10, and also out over the long side of the base part which faces away from the hole 6 so as to form a locking groove 10 extending along said short sides and long side of the base part 8. In the illustrated embodiments, the locking tongue 9 is arranged at the lower end of the base part 8.

In the embodiment illustrated in Figs 1-4, the entire projection 7 and the plate-shaped body 2 are formed in one piece. In the embodiment illustrated in Figs 7-10, the base part 8 of the projection and the plate-shaped body 2 are formed in one piece, for instance by injection moulding, whereas the locking tongue 9 of the projection is made as a separate part which is fixed to the base part 8 in a suitable manner.

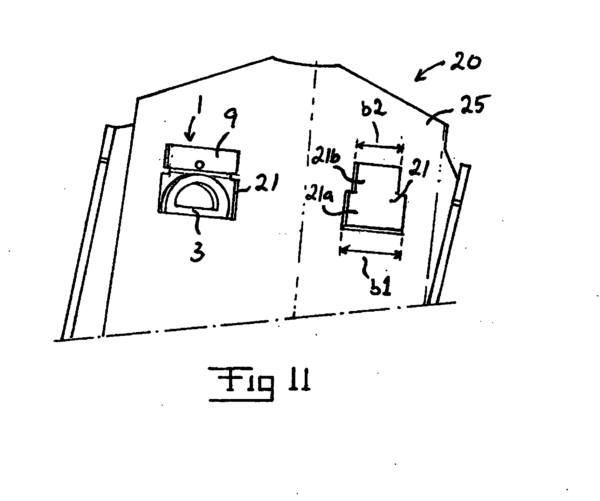

The projection 7 is designed for insertion into a recess 21 which is arranged in the object 20 to which the sliding element 1 is intended to be mounted. This object 20 is in the following denominated first object. In the example illustrated in Fig 4, the recess 21 extends through a wall 25 of the first object 20. The base part 8 and the locking tongue 9 are to have such an extension in a plane parallel to the underside 4 of the plate-shaped body that the base part 8 and the locking tongue 9 can be inserted into the recess 21. The recess 21 has two parts 21a, 21b, which are mutually connected and arranged adjacent to each other, as illustrated in Figs 5 and 11. A first one 21 a of these parts has a width b1 which is larger than the width B1 of the base part 8 and somewhat larger than or equal to the width B2 of the locking tongue 9, and the other part 21b has a width b2, which is somewhat larger than or equal to the width B1 of the base part 8 but smaller than the width B2 of the locking tongue 9. The base part 8 and the locking tongue 9 are consequently insertable into the recess 21 of the first object 20 so that the underside 4 of the body can come into contact with a support surface 22 of this object. The base part 8 and the locking tongue 9 are thereafter, together with the body 2, displaceable in relation to the first object 20 in parallel with the support surface 22 in the direction towards the narrower second part 21 b of the recess into a fastening position, in which the locking groove 10 is in engagement with an edge of the first object which delimits the recess 21, and in which the through hole 6 of the body 2 is in alignment with the recess 21. In this fastening position, the hole 6 and the recess 21 consequently overlap each other, at the same time as the locking tongue 9 at least partly overlaps the second part 21 b of the recess and extends out over the edge of this second part 21 b of the recess. The fixing member 3 is then insertable into the hole 6 and the recess 21 in order to secure the body 2 to the first object 20. The fixing member 3 will then prevent a displacement of the body 2 in relation to the first object 20 in a plane parallel to the support surface 22 of the object, at the same time as the locking tongue 9 prevents a displacement of the body 2 away from the support surface 22 in a direction perpendicularly to the support surface.

When the sliding element has been installed, the upper side 5 of the plate-shaped body is intended to be in sliding contact with a surface 31 of a second object 30 so as to thereby form a sliding surface between this second object 30 and the first object 20. These two objects 20, 30 are arranged to be displaceable in relation to each other in a plane extending in parallel with the upper side 5 of the body and they may be arranged to rest against each other through the sliding element 1, as illustrated in Fig 4.

The fixing member 3 is suitably a plug which is insertable into said hole 6 and said recess 21 and fixable to the plate-shaped body 2 and/or to the first object 20 by force fit. The fixing member 3 could alternatively be provided with an external thread for engagement with an internal thread in the hole 6 so as to thereby make it possible to secure the fixing member in the hole 6 by screwing with a lower part of the fixing member extending into the recess 21.

In the illustrated embodiments, the body 2 is on its upper side 5 provided with a depression 11 in connection with the through hole 6, whereas the fixing member 3 is a plug comprising an upper part 3a, which is receivable in said depression 11 and has a shape essentially corresponding to the shape of this depression, and a lower part 3b connected to the upper part 3a, which lower part is receivable in the through hole 6 and has a cross-sectional shape essentially corresponding to the shape of this hole. The lower part 3b of the fixing member has a smaller cross-sectional shape than the upper part 3a so that a shoulder 12 is formed on the underside of the upper part 3a of the fixing member. This shoulder 12 is intended to come into contact with the bottom surface 13 of the depression 11. Thus, the bottom surface 13 of the depression forms a support surface for the shoulder 12 of the fixing member. The upper part 3a of the fixing member is with advantage receivable with force fit in the depression 11 so as to thereby make it possible to secure the fixing member to the body 2 with the lower part 3b of the fixing member extending through the hole 6 and down into the recess 21. The upper part 3a of the fixing member is so designed that the upper side 14 of this upper part 3a is flush with the upper side 5 of the body when the upper part 3a is completely pressed down into the recess 11.

In the illustrated embodiments, the base part 8 has, at its long side facing the hole 6, a lateral surface 15 which is flush with a part of the edge of the hole 6. The lower part 3b of the fixing member is on one side provided with a lateral surface 16 which is intended to come into contact with said lateral surface 15 of the base part when this lower part 3b is moved down into the hole 6. On its opposite other side, the lower part 3b of the fixing member is provided with a lateral surface 17 which is intended to come into contact with an edge surface 24 of the wider first part 21 a of the recess when this lower part 3b is moved down through the hole 6 and into the recess 21.

The sliding element 1 of the invention is particularly intended to be included in a telescopic device 40 comprising at least two mutually displaceable telescopic parts, the sliding element 1 being intended to be arranged between the two telescopic parts and being attachable to a first one of these telescopic parts. The above mentioned first and second objects 20, 30 may consequently constitute a first telescopic part and a second telescopic part, respectively. The telescopic device 40 is preferably a telescopic crane boom, in which case the respective telescopic part constitutes a telescopic crane boom part.

Figs 5 and 11 illustrate a telescopic crane boom part 20 having a wall 25 provided with two recesses 21, each of which being intended to receive a projection 7 of a sliding element 1. The projection 7 is insertable into the recess 21 in the wall and is thereafter, together with the body 2, displaceable in relation to the wall 25 into a fastening position, in which position the locking groove 10 formed by the locking tongue 9 is in engagement with an edge of the wall 25 which delimits the recess 21, and in which position the through hole 6 in the body 2 is in alignment with the recess 21 in the wall 25. The fixing member 3 included in the sliding element is insertable into the hole 6 and the recess 21 in order to secure the body 2 to the wall 25 when the projection 7 and the body 2 are in said fastening position.

The rear end of a telescopic device 40 in the form of a crane boom provided with three mutually displaceable telescopic parts 20a, 20b, 20c is illustrated in Fig 6. At the rear end of the respective telescopic part, two sliding elements 1 are attached with the plate-shaped body 2 of the respective sliding element arranged on the outside of the telescopic part. Two adjacent telescopic parts are in sliding contact with each other through the sliding elements 1 arranged between these telescopic parts.

The invention is of course not in any way limited to the embodiments described above. On the contrary, several possibilities to modifications thereof should be apparent to a person skilled in the art without thereby deviating from the scope of the appended claims.

## Claims

1. A sliding element intended to be attached to a first object, which sliding element (1) comprises:
- a plate-shaped body (2) with an upper side (5) intended to form a sliding surface between said first object and a second object which is displaceable in relation to the first object, the body (2) being provided with a through hole (6) which is alignable with a recess in said first object, and
- a fixing member (3) which is insertable into said hole (6) and recess in order to secure the body (2) to said first object, **characterized in that** a projection (7) is arranged on the underside (4) of the body (2) adjacent to the through hole (6), which projection (7) comprises a base part (8) projecting from the underside (4) of the body and a locking tongue (9) projecting from the base part (8), the locking tongue (9) extending out over the underside (4) of the body so as to form one or more outwardly open locking grooves (10) between the underside (4) of the body and the locking tongue (9), the projection (7) being designed for insertion into said recess and the respective locking groove (10) being designed for engagement with an edge of said first object which delimits said recess.

2. A sliding element according to claim 1, **characterized in that** the fixing member (3) is a plug, which is insertable into said hole (6) and said recess and fixable to the body (2) and/or said first object by force fit.

3. A sliding element according to claim 2, **characterized in:**
- **that** the body (2) on its upper side (5) has a depression (11) in connection with the through hole (6); and
- **that** the fixing member (3) comprises an upper part (3a), which is receivable in said depression (11) and has a shape essentially corresponding to the shape of this depression, and a lower part (3b) connected to the upper part (3a), which lower part is receivable in the through hole (6) and has a cross-sectional shape essentially corresponding to the shape of this hole.

4. A sliding element according to claim 3, **characterized in that** the upper part (3a) of the fixing member (3) is receivable with force fit in said depression (11) in the body (2).

5. A sliding element according to claim 3 or 4, **characterized in that** the upper part (3a) of the fixing member (3) is so designed that the upper side (14) of this upper part (3a) is flush with the upper side (5) of the body when the upper part (3a) is completely pressed down into said depression (11) in the body (2).

6. A telescopic device, particularly in the form of a telescopic crane boom, comprising at least two mutually displaceable telescopic parts (20, 30; 20a, 20b) and at least one sliding element (1), which is attachable to a first one (20; 20a) of said telescopic parts and comprises a plate-shaped body (2), through which the two telescopic parts (20, 30; 20a, 20b) are intended to be in sliding contact with each other, the body (2) being provided with a through hole (6) which is alignable with a recess (21) in a wall (25) of the first telescopic part (20; 20a), and the sliding element (1) comprising a fixing member (3) which is insertable into said hole (6) and recess (21) in order to secure the body (2) to said wall (25), **characterized in:**
- **that** a projection (7) is arranged on the underside (4) of the body (2) adjacent to the through hole (6);
- **that** the projection (7) comprises a base part (8) projecting from the underside (4) of the body and a locking tongue (9) projecting from the base part (8), the locking tongue (9) extending out over the underside (4) of the body so as to form one or more outwardly open locking grooves (10) between the underside (4) of the body and the locking tongue (9);
- **that** the projection (7) is insertable into the recess (21) in said wall (25) and thereafter, together with the body (2), displaceable in relation to the wall (25) into a fastening position, in which position the respective locking groove (10) is in engagement with an edge of the wall (25) which delimits the recess (21) and in which position the through hole (6) of the body (2) is in alignment with the recess (21) in the wall (6); and
- **that** the fixing member (3) is insertable into said hole (6) and recess (21) in order to secure the body (2) to the wall (25) when the projection (7) and the body (2) are in said fastening position.

7. A telescopic device according to claim 6, **characterized in that** the fixing member (3) is a plug which, when the projection (7) and the body (2) are in said fastening position, is insertable into said hole (6) and recess (21) and fixable to the body (2) and/or the wall (25) by force fit.

8. A telescopic device according to claim 7, **characterized in:**
- **that** the body (2) on its upper side (5) has a depression (11) in connection with the through hole (6); and
- **that** the fixing member (3) comprises an upper part (3a), which is receivable in said depression (11) and has a shape essentially corresponding to the shape of this depression, and a lower part (3b) connected to the upper part (3a), which lower part is receivable in the through hole (6) and has a cross-sectional shape essentially corresponding to the shape of this hole.

9. A telescopic device according to claim 8, **characterized in that** the upper part (3a) of the fixing member (3) is receivable with force fit in said depression (11) in the body (2).

10. A telescopic device according to claim 8 or 9, **characterized in that** the upper part (3a) of the fixing member (3) is so designed that the upper side (14) of this upper part (3a) is flush with the upper side (5) of the body when the upper part (3a) is completely pressed down into said depression (11) in the body (2).

11. A telescopic device according to any of claims 6-10, **characterized in:**
- **that** the recess (21) has two parts (21a, 21b) which are mutually connected and arranged adjacent to reach other, a first one (20a) of these parts having a width (b1) which is larger than the width (B1) of the base part (8) and somewhat larger than or equal to the width (B2) of the locking tongue (9), and the second part (21 b) having a width (b2) which is somewhat larger than or equal to the width (B1) of the base part (8) but smaller than the width (B2) of the locking tongue (9).

## Patentansprüche

1. Gleitelement, das zur Anbringung an einem ersten Objekt vorgesehen ist, wobei das Gleitelement (1) umfasst:
- einen plattenförmigen Körper (2) mit einer oberen Seite (5), die dafür vorgesehen ist, eine Gleitfläche zwischen dem ersten Objekt und einem zweiten Objekt zu bilden, das in Relation zu dem ersten Objekt verschiebbar ist, wobei der Körper (2) mit einem Durchgangsloch (6) versehen ist, das mit einer Ausnehmung in dem ersten Objekt ausrichtbar ist, und
- ein Fixierungselement (3), das in das Loch (6) und die Ausnehmung einsetzbar ist, um den Körper (2) an dem ersten Objekt zu befestigen,
**dadurch gekennzeichnet, dass** ein Vorsprung (7) an der Unterseite (4) des Körpers (2) benachbart zu dem Durchgangsloch (6) angeordnet ist, wobei der Vorsprung (7) einen Basisteil (8), der von der Unterseite (4) des Körpers vorsteht, und eine Verriegelungszunge (9) umfasst, die von dem Basisteil (8) vorsteht, wobei sich die Verriegelungszunge (9) über die Unterseite (4) des Körpers hinaus erstreckt, um eine oder mehrere nach außen hin offene Verriegelungsnuten (10) zwischen der Unterseite (4) des Körpers und der Verriegelungszunge (9) zu bilden, wobei der Vorsprung (7) zum Einsetzen in die Ausnehmung entworfen ist und die jeweilige Verriegelungsnut (10) zum Eingriff mit einem Rand des ersten Objekts, der die Ausnehmung begrenzt, entworfen ist.

2. Gleitelement nach Anspruch 1,
**dadurch gekennzeichnet, dass** das Fixierungselement (3) ein Stopfen ist, der in das Loch (6) und die Ausnehmung einsetzbar und an dem Körper (2) und/oder dem ersten Objekt durch Presspassung fixierbar ist.

3. Gleitelement nach Anspruch 2,
**dadurch gekennzeichnet:**
- **dass** der Körper (2) an seiner oberen Seite (5) eine Vertiefung (11) in Verbindung mit dem Durchgangsloch (6) aufweist; und
- **dass** das Fixierungselement (3) einen oberen Teil (3a), der in der Vertiefung (11) aufnehmbar ist und eine Form aufweist, die im Wesentlichen der Form dieser Vertiefung entspricht und einen unteren Teil (3b) umfasst, der mit dem oberen Teil (3a) verbunden ist, wobei der untere Teil in dem Durchgangsloch (6) aufnehmbar ist und eine Querschnittsform aufweist, die im Wesentlichen der Form dieses Lochs entspricht.

4. Gleitelement nach Anspruch 3,
**dadurch gekennzeichnet, dass** der obere Teil (3a) des Fixierungselements (3) mit Presspassung in der Vertiefung (11) in dem Körper (2) aufnehmbar ist.

5. Gleitelement nach Anspruch 3 oder 4,
**dadurch gekennzeichnet, dass** der obere Teil (3a) des Fixierungselements (3) derart entworfen ist, dass die obere Seite (14) dieses oberen Teils (3a) bündig mit der oberen Seite (5) des Körpers ist, wenn der obere Teil (3a) vollständig in die Vertiefung (11) in den Körper (2) hineingedrückt ist.

6. Teleskopvorrichtung, insbesondere in der Form eines Teleskopkranauslegers, mit zumindest zwei wechselseitig verschiebbaren Teleskopteilen (20, 30; 20a, 20b) und zumindest einem Gleitelement (1), das an einem ersten (20; 20a) der Teleskopzeile anbringbar ist und einen plattenförmigen Körper (2) umfasst, durch den die zwei Teleskopteile (20, 30; 20a, 20b) in Gleitkontakt miteinander stehen sollen, wobei der Körper (2) mit einem Durchgangsloch (6) versehen ist, das mit einer Ausnehmung (21) in einer Wand (25) des ersten Teleskopteils (20; 20a) ausrichtbar ist, und das Gleitelement (1) ein Fixierungselement (3) umfasst, das in das Loch (6) und die Ausnehmung (21) einsetzbar ist, um den Körper (2) an der Wand (25) zu sichern,
**dadurch gekennzeichnet,**
- **dass** ein Vorsprung (7) an der Unterseite (4) des Körpers (2) benachbart zu dem Durchgangsloch (6) angeordnet ist;
- **dass** der Vorsprung (7) einen Basisteil (8), der von der Unterseite (4) des Körpers vorsteht, und eine Verriegelungszunge (9) umfasst, die von dem Basisteil (8) vorsteht, wobei sich die Verriegelungszunge (9) über die Unterseite (4) des Körpers hinaus erstreckt, um eine oder mehrere nach außen hin offene Verriegelungsnuten (10) zwischen der Unterseite (4) des Körpers und der Verriegelungszunge (9) zu bilden;
- **dass** der Vorsprung (7) in die Ausnehmung (21) in der Wand (25) einsetzbar ist und danach zusammen mit dem Körper (2) in Relation zu der Wand (25) in eine Befestigungsposition verschiebbar ist, wobei in der Befestigungsposition die jeweilige Verriegelungsnut (10) mit einem Rand der Wand (25), die die Ausnehmung (21) begrenzt, in Eingriff steht und wobei in der Befestigungsposition das Durchgangsloch (6) des Körpers (2) in Ausrichtung mit der Ausnehmung (21) in der Wand (6) ist; und
- **dass** das Fixierungselement (3) in das Loch (6) und die Ausnehmung (21) einsetzbar ist, um den Körper (2) an der Wand (25) zu sichern, wenn der Vorsprung (7) und der Körper (2) in der Befestigungsposition sind.

7. Teleskopvorrichtung nach Anspruch 6,
**dadurch gekennzeichnet, dass**
das Fixierungselement (3) ein Stopfen ist, der, wenn der Vorsprung (7) und der Körper (2) in der Befestigungsposition sind, in das Loch (6) und die Ausnehmung (21) einsetzbar und durch Presspassung an dem Körper (2) und/oder der Wand (25) fixierbar ist.

8. Teleskopvorrichtung nach Anspruch 7,
**dadurch gekennzeichnet,**
- **dass** der Körper (2) an seiner oberen Seite (5) eine Vertiefung (11) in Verbindung mit dem Durchgangsloch (6) aufweist; und
- **dass** das Fixierungselement (3) einen oberen Teil (3a), der in der Vertiefung (11) aufnehmbar ist und eine Form aufweist, die im Wesentlichen der Form dieser Vertiefung entspricht und einen unteren Teil (3b) umfasst, der mit dem oberen Teil (3a) verbunden ist, wobei der untere Teil in dem Durchgangsloch (6) aufnehmbar ist und eine Querschnittsform aufweist, die im Wesentlichen der Form dieses Lochs entspricht.

9. Teleskopvorrichtung nach Anspruch 8,
**dadurch gekennzeichnet, dass**
der obere Teil (3a) des Fixierungselements (3) mit Presspassung in der Vertiefung (11) in dem Körper (2) aufnehmbar ist.

10. Teleskopvorrichtung nach Anspruch 8 oder 9,
**dadurch gekennzeichnet, dass**
der obere Teil (3a) des Fixierungselements (3) derart entworfen ist, dass die obere Seite (14) dieses oberen Teils (3a) bündig mit der oberen Seite (5) des Körpers ist, wenn der obere Teil (3a) vollständig in die Vertiefung (11) in den Körper (2) hineingedrückt ist.

11. Teleskopvorrichtung nach einem der Ansprüche 6 bis 10,
**dadurch gekennzeichnet,**
- **dass** die Ausnehmung (21) zwei Teile (21a, 21b) aufweist, die wechselseitig verbunden und benachbart zueinander angeordnet sind, wobei ein erstes (20a) dieser Teile eine Breite (b1) aufweist, die größer als die Breite (B1) des Basisteils (8) und etwa größer als oder gleich wie die Breite (B2) der Verriegelungszunge (9) ist, und das zweite Teil (21b) eine Breite (b2) aufweist, die etwas größer als oder gleich wie die Breite (B1) des Basisteils (8) aber kleiner als die Breite (B2) der Verriegelungszunge (9) ist.

## Revendications

1. Elément coulissant destiné à être attaché à un premier objet, lequel élément coulissant (1) comprend :
- un corps en forme de plaque (2) avec un côté supérieur (5) destiné à former une surface de coulissement entre ledit premier objet et un second objet qui est déplaçable par rapport au premier objet, le corps (2) étant pourvu d'un trou traversant (6) qui est alignable avec un évidement dans ledit premier objet, et
- un organe de fixation (3) qui est insérable dans lesdits trou (6) et évidement afin d'arrimer le corps (2) audit premier objet,
**caractérisé en ce qu'**une saillie (7) est agencée sur le dessous (4) du corps (2) adjacent au trou traversant (6), laquelle saillie (7) comprend une partie de base (8) faisant saillie du dessous (4) du corps et une languette de verrouillage (9) faisant saillie de la partie de base (8), la languette de verrouillage (9) se déployant au dessous (4) du corps de façon à former une ou plusieurs rainures (10) de verrouillage ouvertes vers l'extérieur entre le dessous (4) du corps et la languette de verrouillage (9), la saillie (7) étant conçue pour une insertion dans ledit évidement et la rainure (10) de verrouillage respective étant conçue pour une mise en prise avec un bord dudit premier objet qui délimite ledit évidement.

2. Elément coulissant selon la revendication 1, **caractérisé en ce que** l'organe de fixation (3) est un bouchon, qui est insérable dans ledit trou (6) et ledit évidement et fixable au corps (2) et/ou audit premier objet par ajustement en force.

3. Elément coulissant selon la revendication 2, **caractérisé en ce que** :
- le corps (2) sur son côté supérieur (5) comporte une dépression (11) en liaison avec le trou traversant (6) : et
- l'organe de fixation (3) comprend une partie supérieure (3a), qui peut être logée dans ladite dépression (11) et a une forme correspondant essentiellement à la forme de cette dépression, et une partie inférieure (3b) raccordée à la partie supérieure (3a), laquelle partie inférieure peut être logée dans le trou traversant (6) et a une forme en coupe correspondant essentiellement à la forme de ce trou.

4. Elément coulissant selon la revendication 3, **caractérisé en ce que** la partie supérieure (3a) de l'organe de fixation (3) peut être logée par ajustement en force dans ladite dépression (11) située dans le corps (2).

5. Elément coulissant selon la revendication 3 ou 4, **caractérisé en ce que** la partie supérieure (3a) de l'organe de fixation (3) est conçue de sorte que le côté supérieur (14) de cette partie supérieure (3a) est en affleurement avec le côté supérieur (5) du corps lorsque la partie supérieure (3a) est complètement pressée vers le bas dans ladite dépression (11) située dans le corps (2).

6. Dispositif télescopique, en particulier sous la forme d'une flèche de grue télescopique, comprenant au moins deux parties télescopiques mutuellement déplaçables (20, 30 ; 20a, 20b) et au moins un élément coulissant (1), qui est attachable à une première (20 ; 20a) desdites parties télescopiques et comprend un corps en forme de plaque (2), à travers lequel les deux parties télescopiques (20, 30 ; 20a, 20b) sont destinées à venir en contact coulissant l'une avec l'autre, le corps (2) étant pourvu d'un trou traversant (6) qui est alignable avec un évidement (21) dans une paroi (25) de la première partie télescopique (20 ; 20a), et l'élément coulissant (1) comprenant un organe de fixation (3) qui est insérable dans lesdits trou (6) et évidement (21) afin d'arrimer le corps (2) à ladite paroi (25), **caractérisé en ce que** :
- une saillie (7) est agencée sur le dessous (4) du corps (2) adjacent au trou traversant (6) ;
- la saillie (7) comprend une partie de base (8) faisant saillie du dessous (4) du corps et une languette de verrouillage (9) faisant saillie de la partie de base (8), la languette de verrouillage (9) se déployant au dessous (4) du corps de façon à former une ou plusieurs rainures (10) de verrouillage ouvertes vers l'extérieur entre le dessous (4) du corps et la languette de verrouillage (9) ;
- la saillie (7) est insérable dans l'évidement (21) situé dans ladite paroi (25) et ensuite, conjointement avec le corps (2), déplaçable par rapport à la paroi (25) dans une position d'arrimage, position dans laquelle la rainure (10) de verrouillage respective est en prise avec un bord de la paroi (25) qui délimite l'évidement (21) et position dans laquelle le trou traversant (6) du corps (2) est en alignement avec l'évidement (21) situé dans la paroi (6) ; et
- l'organe de fixation (3) est insérable dans lesdits trou (6) et évidement (21) afin d'arrimer le corps (2) à la paroi (25) lorsque la saillie (7) et le corps (2) sont dans ladite position d'arrimage.

7. Dispositif télescopique selon la revendication 6, **caractérisé en ce que** l'organe de fixation (3) est un bouchon qui, lorsque la saillie (7) et le corps (2) sont dans ladite position d'arrimage, peut être inséré dans lesdits trou (6) et évidement (21) et peut être fixé au corps (2) et/ou à la paroi (25) par un ajustement en force.

8. Dispositif télescopique selon la revendication 7, **caractérisé en ce que** :
- le corps (2) sur son côté supérieur (5) comporte une dépression (11) en relation avec le trou traversant (6) ; et
- l'organe de fixation (3) comprend une partie supérieure (3a) qui est recevable dans ladite dépression (11) et a une forme correspondant essentiellement à la forme de cette dépression, et une partie inférieure (3b) raccordée à la partie supérieure (3a), laquelle partie inférieure peut être logée dans le trou traversant (6) et a une forme en coupe correspondant essentiellement à la forme de ce trou.

9. Dispositif télescopique selon la revendication 8, **caractérisé en ce que** la partie supérieure (3a) de l'organe de fixation (3) peut être logée par ajustement en force dans ladite dépression (11) située dans le corps (2).

10. Dispositif télescopique selon la revendication 8 ou 9, **caractérisé en ce que** la partie supérieure (3a) de l'organe de fixation (3) est conçue de sorte que le côté supérieur (14) de cette partie supérieure (3a) est en affleurement avec le côté supérieur (5) du corps lorsque la partie supérieure (3a) est complètement pressée vers le bas dans ladite dépression (11) située dans le corps (2).

11. Dispositif télescopique selon l'une quelconque des revendications 6 à 10, **caractérisé en ce que** :
- l'évidement (21) comporte deux parties (21a, 21b) qui sont mutuellement raccordées et agencées adjacentes pour se rejoindre l'une l'autre, une première (20a) de ces parties ayant une largeur (b1) qui est plus grande que la largeur (B1) de la partie de base (8) et quelque peu supérieure ou égale à la largeur (B2) de la languette de verrouillage (9), et la seconde partie (21b) ayant une largeur (b2) qui est quelque peu supérieure ou égale à la largeur (B1) de la partie de base (8) mais plus petite que la largeur (B2) de la languette de verrouillage (9).
